# EUROPEAN PATENT APPLICATION

(11) **EP 1 510 364 A2**
(43) Date of publication of application: **02.03.2005**
(21) Application number: 04104120.3
(22) Date of filing: 27.08.2004
(51) Int. Cl.: B60B 35/16

(54) **Dampener mount for axle housing**

(30) Priority: 29.08.2003 US 650717
(71) Applicant: DANA CORPORATION, Toledo, OH 43615 (US)
(72) Inventor: Knapke, Brian, Toledo, Ohio 43614 (US); Henricks, Scott, Birmingham, MI 48009 (US)
(74) Representative: Jorio, Paolo, Dr. Ing.

(57) **Abstract**

A dampener mount (113) for an axle to absorb/dampen/inhibit power-hop induced oscillations in a rear axle assembly. A housing (150) for the axle assembly incorporates a mount (113) for attaching a shock absorber/dampener (130) which is in turn connected to the unsparing mass of a vehicle (200). Preferably the shock absorber/dampener (130) is secured to a bracket (113) connected or otherwise formed with the housing cover (110).

## Description

### BACKGROUND OF THE INVENTION

### 1. Field of the Invention

The preset invention is directed to a dampener mount for an axle housing and particularly to such a mount for connecting a dampener to the sprung mass of a vehicle.

### 2. Discussion of the Related Art

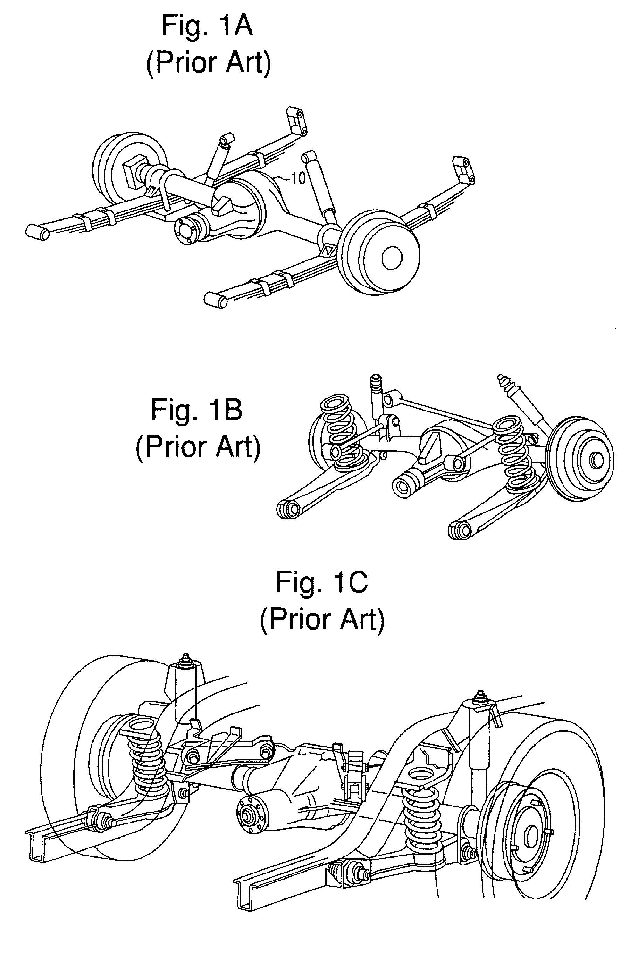

Vehicles equipped with axle assemblies, and more particularly differential axle assemblies, are old and well known in the art. Figs. 1A-1C depict several conventional assemblies. Figs 1A-1B show banjo type rigid rear axle assemblies and Fig. 1C shows a Salisbury type rear axle assembly. Each assembly is connected to the vehicle through a suspension system. As previously mentioned, such assemblies are well known.

During conditions of high torque, and particularly low traction, a vehicle can experience an undesired power-hop condition. Power-hop is a condition of driveline instability initiated when the tractive effort decreases due to tire slip beyond an optimal slip value. If the engine torque is sufficiently high a power-hop condition can be sustained, resulting in both torsional oscillation of the vehicle driveline and vertical oscillation of suspension members. For example, in the assembly of Fig. 1A, during a power hop condition, the leaf springs will deform and the axle tubes will move both longitudinally and vertically relative to the vehicle. The torque induced power hop condition imposes oscillating forces on the rigid axle housing which are undesirable.

### SUMMARY OF THE INVENTION

The present invention is directed to a dampener mount for an axle to absorb power-hop induced oscillations in a rear axle assembly. A housing for the axle assembly incorporates a mount for attaching a shock absorber/dampener which is in turn connected to the sprung mass of a vehicle. Preferably the mount includes a bracket connected or otherwise secured to the housing cover.

### BRIEF DESCRIPTION OF THE DRAWINGS

Figures 1A-1C depict conventional rear axle assemblies.
Figure 2 depicts an isolated rear view of an axle housing cover with mounting bracket according to the present invention.
Figure 3 depicts an isolated side view of the axle housing cover according to figure 2.
Figure 4 is a schematic view of the axle housing cover and dampener connected to a vehicle according to a preferred embodiment of the present invention.

### DETAILED DESCRIPTION OF THE PREFERRED EMBODIMENTS

Figures 1A, 1B, 1C depict several conventional rear axle assemblies. In each of these assemblies it is known to secure a removable cover to expose the gearing of the differential assembly disposed therein. Fig. 1A depicts a portion of a cover as shown by reference number 10. In each of the assemblies of Fig. 1A, 1B, 1C, an axle housing contains a gear set disposed within said housing for permitting differential rotation between a pair of output shafts drivingly connected to a pair of wheels. Fig. 1A depicts a rigid rear axle beam and banjo type axle housing assembly. In an effort to resolve the problems associated with power hop conditions, which can be particularly troublesome in rigid rear axle assemblies, the present invention employs a mounting bracket secured directly to the axle housing for connecting a shock absorber/damper between the housing and the sprung mass of the vehicle.

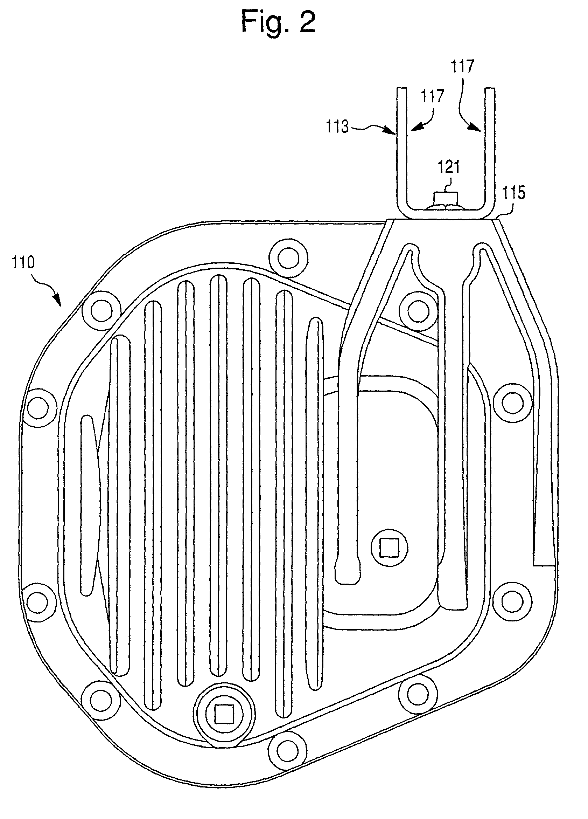

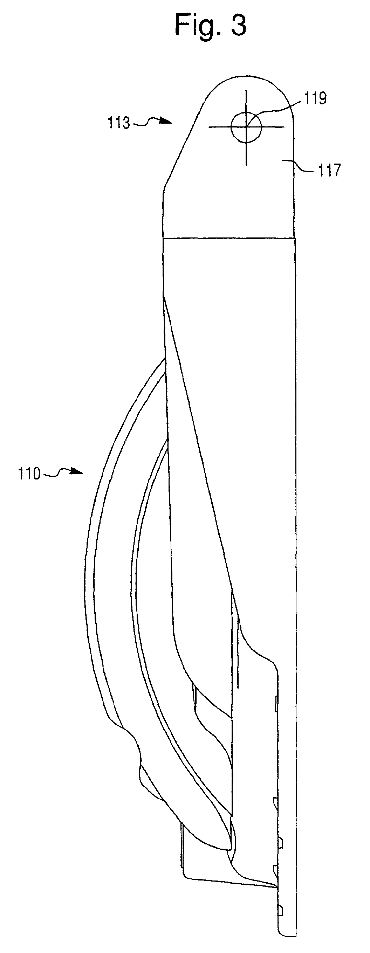

Fig. 2-3 depicts a rear cover 110 having a mounting bracket 113 secured to a top portion 115 of the cover 110. In a preferred embodiment, the mounting 113 is in the form of a U-shaped bracket 113 having juxtaposed parallel upright members 117 each having an aligned bore 119 for receiving a bolt (not shown) to connect with said shock absorber. The U-shaped bracket 113 may be simply bolted to a substantially planar top portion 115 of the rear cover 110. A bolt 121 may extend through a bore (not shown) of a lower portion of the U-shaped bracket and threadingly engages a threaded bore (not shown) formed in the planar top surface 115 of the cover 110. Alternately, the bracket 113 may be welded or homogenously formed as a unitary body with the rear cover 110 such as during a casting of stamping process. Fig. 3 depicts an isolated side view of the rear cover 110 revealing the bracket 113 and its parallel upright members 117 and aligned bores 119. It is to be understood, that while an isolated view of the shock absorber connected to the bracket is not depicted, forming such a connection is well within the knowledge of one of ordinary skill in the art. A shock absorber/damper having a conventional ball joint type or other connection may simply be connected to the bracket with an appropriately sized bolt. Therefore, no further detailed description of such a connection is needed.

The mount/bracket 113 may be formed in many fashions. For example, the bracket may be formed of steel, stamped or forged to meet load requirements. The bracket may also be made of the same material as the rear cover 113 for example if cast or stamped homogeneously with the forming of the cover 113.

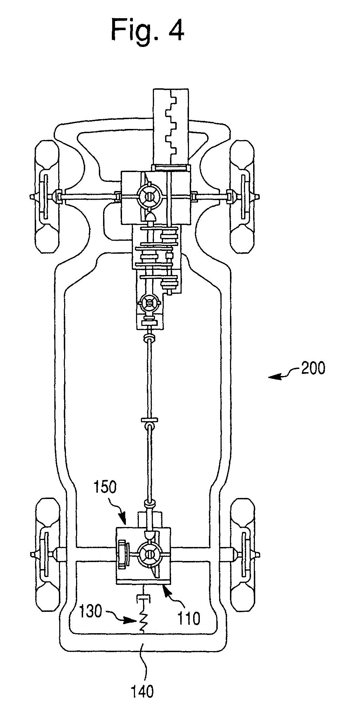

Fig. 4 depicts a schematic view of the axle housing 150 and mounting bracket 113 arrangement in a vehicle 200. In order to dampen longitudinal oscillations induced to the axle housing 150, the shock absorber/dampener 130 extends substantially horizontally and substantially in a longitudinal direction of said vehicle 200 and is disposed proximate a centerline of the vehicle 200. The shock absorber/dampener 130 may be connected directly to the vehicle frame 140 or otherwise secured to the sprung mass of the vehicle. It is to be understood that the term "sprung mass" is a commonly understood term in the art which refers to the part of the vehicle 200 supported by springs such as the vehicle frame 140 and vehicle body. In contrast, unsprung mass refers to the mass of the vehicle that is not supported by springs such as the wheels and axles.

In a preferred embodiment the mount/bracket 113 is secured directly to the rear cover 110. Such an arrangement facilitates an easy and simple installation. Moreover, because the rear cover 110 is a removable and easily replaceable component of the axle assembly 150, such an arrangement is particularly useful for retrofit installations. No alterations to conventional axle assemblies are needed. The shock absorber 130 is simply connected to the bracket 113 and a corresponding mount need only be secured to the sprung mass of the vehicle such as the vehicle frame 140 to facilitate connection of the opposite end of the shock absorber/dampener 130. As previously indicated, it is well within the skill of one of ordinary skill in the art to connect a shock absorber 130 to the vehicle frame 140. For example, a second U-shaped bracket may be simply welded or bolted to the vehicle frame 140 or other suitable portion of the sprung mass and the shock absorber 130 installed with bolts as conventional shock absorbers are installed.

It is also understood, that the size and capacity of the shock absorber 130 will depend on the particular vehicle to which it is installed. Heavier vehicles and vehicles with significantly large torque loads will require larger and heavier duty dampeners. It is contemplated the off the shelf shock absorbers may be employed in certain applications where specifications match.

While the foregoing invention has been shown and described with reference to a preferred embodiment, it will be understood by those possessing skill in the art that various changes and modifications may be made without departing from the spirit and scope of the invention. For example, in heavy-duty vehicles, the rear cover 110 may need to be strengthened to accommodate the forces transmitted by the shock absorber 130. In such a case the cover may be strengthened in any fashion such as integrated reinforcing ribs, increasing the thickness of the cover or any other conventional means to strengthen the cover. Furthermore, while the present invention has been shown with the shock absorber 130 extending rearward from the differential cover 110, the shock absorber may also extend forward and connect to an intermediate cross frame member (not shown) or other portion of the sprung mass of the vehicle. IT is to be understood that it is well within the skill of one of ordinary skill to alternatively mount the shock absorber is a forward oriented position.

## Claims

1. A drive axle assembly connected to a sprung mass of a vehicle, said drive axle assembly comprising:
a hollow axle housing having an opening therethrough;
a removable cover member provided to cover said opening in said axle housing, said cover having at least one bracket facilitating a connection to a shock absorber, wherein said shock absorber is connected between said cover and said sprung mass of said vehicle to directly dampen relative movement there between.

2. The drive axle assembly according to claim 1, wherein said shock absorber extends substantially horizontally and substantially in a longitudinal direction of said vehicle.

3. The drive axle assembly according to claim 1, wherein said cover includes a bracket integrally formed thereto facilitating said connection to said sprung mass of said vehicle.

4. The drive axle assembly according to claim 3, wherein said bracket is homogenously formed with said cover as a unitary body.

5. The drive axle assembly according to claim 4, wherein said bracket includes two juxtaposed parallel upright members each having an aligned bore for receiving a bolt to connect with said shock absorber.

6. The drive axle assembly according to claim 3, wherein said bracket includes two juxtaposed parallel upright members each having an aligned bore for receiving a bolt to connect with said shock absorber.

7. The drive axle assembly according to claim 6, wherein said bracket is formed of a substantially U-shaped member bolted to a top substantially planar surface of said cover.

8. The drive axle assembly according to claim 3, wherein said shock absorber is connected directly to said bracket of said cover and directly to said sprung mass of said vehicle.

9. The drive axle assembly according to claim 3, wherein said shock absorber extends substantially horizontally and substantially in a longitudinal direction of said vehicle proximate a longitudinal centerline of said vehicle.

10. An axle assembly in combination with a vehicle having a suspension assembly connecting said axle assembly to an sprung mass of said vehicle; said axle assembly comprising:
a housing,
a differential gear set disposed within said housing for permitting differential rotation between a pair of output shafts drivingly connected to a pair of wheels; and
a shock absorber connected between said differential housing and said sprung mass of said vehicle.

11. The combination according to claim 10, wherein said housing includes a removable cover, said cover having a bracket integrally formed thereto and connected to said shock absorber facilitating said connection to said sprung mass of said vehicle.

12. The combination according to claim 11, wherein said bracket is homogenously formed with said cover as a unitary body.

13. The combination according to claim 12, wherein said bracket includes two juxtaposed parallel upright members each having an aligned bore for receiving a bolt to connect with said shock absorber.

14. The combination according to claim 11, wherein said bracket includes two juxtaposed parallel upright members each having an aligned bore for receiving a bolt to connect with said shock absorber.

15. The combination according to claim 14, wherein said bracket is formed of a substantially U-shaped member bolted to a top substantially planar surface of said cover.
